# DEMANDE DE BREVET EUROPEEN

(11) **EP 1 655 486 A1**
(43) Date de publication de la demande: **10.05.2006**
(21) Numéro de dépôt: 04026132.3
(22) Date de dépôt: 04.11.2004
(51) Int. Cl.: F03G 7/10, F03G 3/02, F03G 3/00

(54) **Dispositif pour constituer des appareils produisant de l'énergie**

(71) Demandeur: Garot, Christian, 71480 Dommartin les Cuiseaux (FR)
(72) Inventeur: Garot, Christian, 71480 Dommartin les Cuiseaux (FR)

(57) **Abrégé**

L'invention concerne un dispositif permettant de constituer des appareils produisant de l'énergie.

Il comporte un mécanisme générateur d'énergies constitué de mécanismes rotatifs (15) entraînés par des variateur de vitesse (12,13,14) mus par des leviers mobiles (4,5) entraînés en rotation autour d'un axe (2) par un moteur (6) alimenté en énergie par le mécanisme générateur d'énergie, les leviers mobiles (4,5) démultipliant la force rotatrice exercée par le moteur (6).

Le dispositif selon l'invention est particulièrement destiné à produire de l'énergie électrique.

## Description

La présente invention concerne un dispositif pour constituer des appareils autonomes produisant de l'énergie pour permettre une perpétuelle production d'énergie.

Les appareils générateurs d'énergies sont en majeure partie entraînés par des moteurs transformant en énergie mécanique des énergies dites non renouvelables, ce qui constitue un élément à caractère limitatif.

Certains moteurs transforment en énergie mécanique des énergie dites renouvelables, mais n'éliminant pas certains éléments à caractère limitatif et notamment d'ordre climatique et météorologique.

Le dispositif selon l'invention permet de remédier à ces inconvénients. Il comporte en effet selon une première caractéristique, un appareillage comportant un mécanisme générateur d'énergie constitué de mécanismes rotatifs dont la partie mobile respective est entraînée en rotation par des variateur de vitesse mus par des leviers mobiles entraînés en rotation autour d'un axe par un moteur pouvant être alimenté en énergie par le mécanisme générateur d'énergie dont la puissance est supérieure à celle du moteur , les leviers mobiles démultipliant la force rotatrice exercée par le moteur; cet appareillage comportant un châssis supportant un arbre présentant une partie creuse et des orifices par lesquels passent des conducteurs d'énergie et une partie mobile constituée de deux pièces hémisphériques creuses (centrées sur l'arbre et positionnées symétriquement l'une par rapport à l'autre et mobiles en rotation autour de l'arbre et constituant deux leviers mobiles entraînés simultanément en rotation autour de l'arbre et dans le sens inverse l'un de l'autre par un moteur comportant un arbre pourvu d'un pignon engrené avec une couronne périphérique dentée respective des leviers mobiles comportant respectivement un moyeu traversé par l'arbre et pourvu d'une denture périphérique solidaire d'un organe de transmission; ce dernier comportant un arbre pourvu de pignons de diamètres différents et constituant un variateur de vitesse solidaire de la partie mobile respective de mécanismes rotatifs générateurs d'énergie; ces derniers comportant respectivement un arbre pourvu d'un pignon entraînés en rotation par les variateurs de vitesse lorsque le moteur est alimenté en énergie et entraîne les deux leviers mobiles en rotation autour de l'arbre et des paliers supportant respectivement un arbre pourvu d'un pignon engrené avec la denture périphérique respective des leviers mobiles constituant ensembles un sphéroïde creux à l'intérieur duquel sont fixés sur l'arbre le support respectif des variateurs de vitesse et le support du moteur et des paliers et des mécanismes rotatifs générateurs d'énergie alimentant notamment et périodiquement des accumulateurs énergie; ces derniers alimentant le moteur durant la phase de démarrage de cet appareil.

Selon des modes particuliers de réalisation :
- le mécanisme générateur d'énergie peut être constitué de deux rotors solidaires entre-eux et comportant respectivement une couronne périphérique dentée engrenée avec un variateur de vitesse solidaire d'un levier mobile, les rotors étant entraînés simultanément en rotation autour de l'arbre et dans le sens inverse l'un de l'autre lorsque les deux leviers mobiles sont entraînés en rotation autour de l'arbre par un moteur.
- le moteur peut être constitué d'un mécanisme rotatif transformant en énergie mécanique une énergie de source gravifique engendrée par la partie mobile de ce mécanisme rotatif constituée de rotors solidaires entre eux et respectivement entraînés dans un continuel mouvement rotatoire par une résultante de forces gravifiques appliquées continuellement sur des pièces mobiles et pesantes solidaires des rotors et constituant périodiquement sur chaque rotor des leviers pesants sur un secteur angulaire ayant pour sommet l'axe de rotation du rotor et pour bissecteur un plan horizontal théorique passant par ce même axe et ce mécanisme rotatif comportant un châssis constituant un corps creux et deux rotors situés à l'intérieure du châssis et reposant sur ce dernier et constitués d'un engrenage comportant deux arbres de transmission dentés parallèles entre eux et en position horizontale et des pièces modulaires mobiles et pesants dont la section respective est constituée d'une bande pleine courbe et fermée et de forme polygonale régulière aux cotés et sommets tangents entre eux et présentant une denture périphérique intérieure et une denture périphérique extérieure et chaque arbre traversant de part en part une rangée de pièces modulaires et s'engrenant avec la denture périphérique intérieure respective de ces pièces modulaires respectivement engrenées avec la denture périphérique extérieure d'une pièce modulaire solidaire de l'autre arbre et réciproquement et chaque rangée de pièces modulaires constituant autour d'un arbre un hélicoïde mobile excentré par rapport à l'axe de rotation de cet l'arbre et centré sur un axe théorique parallèle à l'axe de rotation de cet arbre et cet axe se confondant à un plan horizontal théorique passant par l'axe de rotation des deux arbres et excentrant le centre de gravité respectif des hélicoïdes mobiles et par rapport à l'axe de rotation de l'arbre avec lequel ils sont respectivement engrenés et chaque pièce modulaire constituant périodiquement l'un des leviers (31) dont le centre de gravité respectif est le plus excentré par rapport à l'axe de rotation de l'arbre avec lequel elles sont engrenées et se situant sur un secteur angulaire ayant pour sommet l'axe de rotation de cet arbre et pour bissecteur un plan horizontal théorique passant par ce même axe et engendrant sur chaque hélicoïde mobile une résultante de forces gravifiques entraînant chaque pièce modulaire dans un continuel mouvement rotatoire composé décrivant une courbe elliptique excentrée par rapport à l'axe de rotation de l'arbre et centrée sur un axe théorique parallèle à l'axe de rotation de cet arbre et cet axe se confondant à un plan horizontal théorique passant par l'axe de rotation de ces deux arbres de transmission simultanément entraînés en rotation autour de leur axe respectif et dans le sens inverse l'un de l'autre et respectivement pourvus d'une pièce circulaire située à l'extérieur du châssis et constituant deux volants régulateurs de vitesse et du mouvement rotatoire respectif des pièces modulaires et l'un de ces arbres de transmission supportant un pignon situé à l'extérieure du châssis et engrené avec la partie périphérique dentée respective des leviers mobiles constituant la partie mobile du mécanisme rotateur entraînée en rotation autour de l'arbre lorsque ce moteur n'est pas immobilisé par des patins mobiles actionnés par des vérins exerçant une pression sur ces patins et plaquant ces derniers sur les faces latérales des volants montés concentriquement sur les arbres de transmission de ce mécanisme rotatif dont la partie mobile est lubrifiée par barbotage périodique des pièces modulaires et dans la partie basse du châssis constituant le contenant d'un lubrifiant à l'état liquide.
- la partie mobile du mécanisme rotatif peut être constituée de rotors solidaires entre-eux et comportant respectivement un arbre en position horizontale et pourvu de pièces circulaires présentant respectivement une denture périphérique et disposées à espaces réguliers sur la longueur de cet arbre et solidaires en rotation avec ce dernier et des pièces modulaires mobiles et pesantes solidaires des pièces circulaires et disposées à espaces réguliers autour de l'arbre et translatant librement sur les pièces circulaires et suivant un axe théorique respectif passant par l'axe de rotation de l'arbre, des déviateurs de trajectoire fixées sur le châssis et situées de part et d'autre des pièces circulaires et constituant deux rampes courbes de forme elliptique parallèles entre elles et positionnant et guidant les pièces modulaires sur une courbe théorique de forme elliptique fermée autour de l'arbre et excentrée par rapport à l'axe de rotation de l'arbre et centrée sur un axe théorique parallèle à l'axe de rotation de cet arbre et cet axe se confondant à un plan horizontal théorique passant par l'axe de rotation de ce même arbre et excentrant continuellement le centre de gravité respectif des pièces circulaires constituant respectivement et continuellement des leviers pesants situés sur un secteur angulaire ayant pour sommet l'axe de rotation de l'arbre et pour bissecteur un plan horizontal théorique passant par ce même axe et engendrant sur chaque rotor une résultante de forces gravifiques entraînant ces derniers dans un continuel mouvement rotatoire autour de leur axe respectif et entraînant chaque pièce modulaire dans un continuel mouvement rotatoire composé décrivant une courbe elliptique engendrée par les déviateurs de trajectoires et entraînant chaque arbre de transmission dans un continuel mouvement rotatoire autour de son axe.
- la partie mobile du mécanisme rotatif (38) peut être constituée de rotors solidaires entre-eux et comportant respectivement un arbre en position horizontale pourvu d'une pièce circulaire présentant une denture périphérique et des pièces modulaires mobiles et pesantes respectivement pourvues de galet situés de part et d'autre des pièces modulaires disposées à espaces réguliers sur la longueur de l'arbre et solidaires en rotation avec ce dernier et libres en translation sur ce dernier suivant un axe théorique respectif perpendiculaire à l'arbre et passant par l'axe de rotation de cet arbre et constituant ensemble un hélicoïde mobile excentré par rapport à l'axe de rotation de l'arbre et centré sur un axe parallèle à l'axe de rotation de l'arbre et se confondant à un plan horizontal théorique passant par l'axe de rotation de cet arbre, des déviateurs de trajectoire respectivement constitués d'une rampe sinusoïdale fixée sur le châssis et disposés de part et d'autre des pièces modulaires et les galets guidés par les rampes maintenant ensembles l'hélicoïde mobile en position excentrée par rapport à l'axe de rotation de l'arbre et cet hélicoïde mobile décrivant une courbe de forme elliptique fermée autour de l'arbre et excentrée par rapport à l'axe de rotation de cet arbre et centrée sur un axe théorique parallèle à l'axe de rotation de cet arbre et cet axe se confondant à un plan horizontal théorique passant par l'axe de rotation de ce même arbre et excentrant continuellement le centre de gravité respectif des rotors et constituant sur chaque rotor des leviers pesants sur un secteur angulaire ayant pour sommet l'axe de rotation du rotor et pour bissecteur un plan horizontal théorique passant par ce même axe et engendrant sur chaque rotor une résultante de forces gravifiques entraînant ces derniers dans un continuel mouvement rotatoire autour de leur axe respectif et entraînant chaque pièce modulaire dans un continuel mouvement rotatoire composé décrivant une courbe elliptique engendrée par les déviateurs de trajectoires et les galets et entraînant chaque arbre de transmission dans un continuel mouvement rotatoire autour de leur axe respectif.
- la partie mobile du mécanisme rotatif peut être constituée de rotors solidaires entre eux et comportant respectivement un arbre pourvu d'une pièce circulaire présentant une denture périphérique et d'un pignon situé à l'extérieure du châssis et engrené avec la partie périphérique dentée respective des leviers mobiles et des pièces télescopiques disposés à espaces réguliers autour de l'arbre et sur sa longueur et suivant une disposition hélicoïdale et solidaires en rotation avec l'arbre et constituant respectivement et périodiquement des leviers pesant déployés perpendiculairement à l'axe de rotation de l'arbre et sur un secteur angulaire théorique ayant pour sommet l'axe de rotation de l'arbre et pour bissecteur un plan horizontal théorique passant par ce même axe et lorsque ces pièces télescopiques sont soumises à une pression exercée par un fluide agissant sur une partie interne des pièces télescopiques et déployant et rétractant périodiquement ces dernières, cette pression étant engendrée par un mécanisme rotatif constituant le mécanisme générateur d'énergie, des déviateurs de trajectoire escamotables déployant et rétractant périodiquement ces pièces télescopiques durant la phase de démarrage de l'appareil.

Les dessins annexés illustrent l'invention :

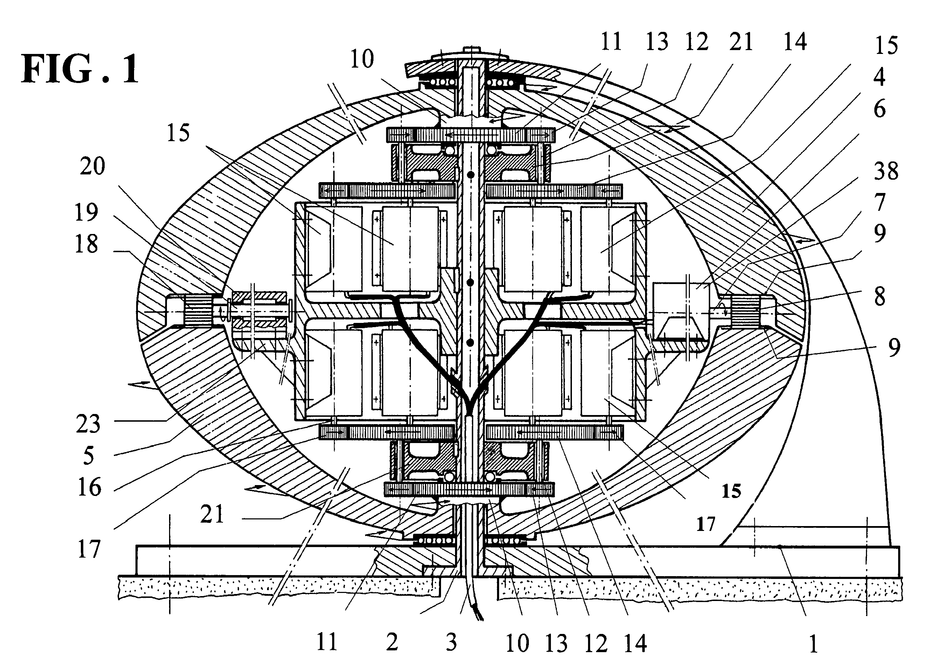

- La figure 1 représente en coupe, le dispositif de l'invention.
- La figure 2 représente en coupe, une variante de ce dispositif.
- La figure 3 représente en coupe, une variante de ce dispositif.
- La figure 4 représente en coupe, une variante de ce dispositif.
- La figure 5 représente en coupe, une variante de ce dispositif.

En référence à ces dessins, le dispositif comporte un châssis (1) constitué d'une potence fixée sur une semelle et supportant un arbre creux (2) fixé à l'une de ses extrémités sur la semelle et à l'autre extrémité sur la potence et à l'intérieur duquel sont fixés des éléments conducteurs d'énergie (3) et une partie mobile constituée de deux pièces hémisphériques creuses (4)(5) centrées sur l'arbre (2) et positionnées symétriquement l'une (4) par rapport à l'autre (5) et mobiles en rotation autour de l'arbre (2) et constituant deux leviers mobiles (4)(5) entraînés simultanément en rotation autour de l'arbre (2) et dans le sens inverse l'un de l'autre par un moteur (6) comportant un arbre (7) pourvu d'un pignon (8) engrené avec une couronne périphérique dentée (9) respective des leviers mobiles (4)(5) comportant respectivement un moyeu (10) traversé par l'arbre (2) et pourvu d'une denture périphérique (11) solidaire d'un organe de transmission comportant un arbre (12) pourvu de pignons (13)(14) de diamètres différents et constituant un variateur de vitesse (12)(13)(14) solidaire de la partie mobile respective de mécanismes rotatifs (15) générateurs d'énergie comportant respectivement un arbre (16) pourvu d'un pignon (17) entraînés en rotation par les variateurs de vitesse (12)(13)(14) lorsque le moteur (6) est alimenté en énergie et entraîne les deux leviers mobiles (4)(5) en rotation autour de l'arbre (2) et des paliers (20) supportant respectivement un arbre (19) pourvu d'un pignon (18) engrené avec la denture périphérique respective (9) des leviers mobiles (4)(5) constituant ensembles un sphéroïde creux à l'intérieur duquel sont fixés sur l'arbre (2) le support (21) respectif des variateurs de vitesse (12)(13)(14) et le support (23) du moteur (6) et des paliers (20) et des mécanismes rotatifs générateurs d'énergie (15) alimentant notamment et périodiquement des accumulateurs énergie, ces accumulateurs d'énergie alimentant le moteur (6) durant la phase de démarrage de cet appareil. Le rayon respectif des leviers mobiles (4)(5) et des couronnes dentées (11) sont tels, qu'un faible effort exercé sur la périphérie respective des leviers (4)(5), par un moteur (6) de faible puissance, engendre la force rotatrice nécessaire pour entraîner simultanément en rotation la partie mobile respective du mécanisme rotateur et des variateurs de vitesse et de mécanismes rotatifs (15) de forte puissance, engendrant notamment et respectivement et mécaniquement de l'énergie électrique et ou hydraulique et ou pneumatique; les leviers mobiles (4)(5) comportant respectivement une forme extérieur et intérieur respectivement hémisphérique diminuant la résistance à l'air des leviers mobiles (4)(5) et une partie périphérique respective plus massive constituant un volant d'inertie durant le mouvement rotatoire des leviers (4)(5) autour de l'arbre (2).

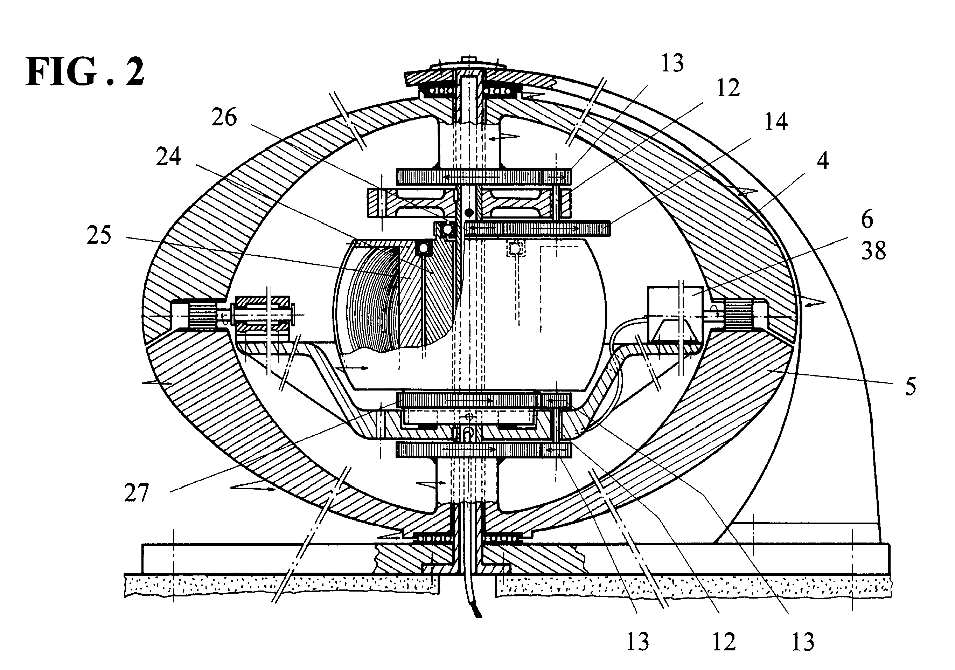

Selon une variante illustrée figure 2, le mécanisme générateur d'énergie est constitué de deux rotors (24)(25) solidaires entre-eux et comportant respectivement une couronne périphérique dentée (26)(27) engrenée avec un variateur de vitesse solidaire d'un levier mobile, les rotors (24) (25) étant entraînés simultanément en rotation autour de l'arbre (2) et dans le sens inverse l'un de l'autre lorsque les deux leviers mobiles (4)(5) sont entraînés en rotation autour de l'arbre (2) par un moteur (6).3

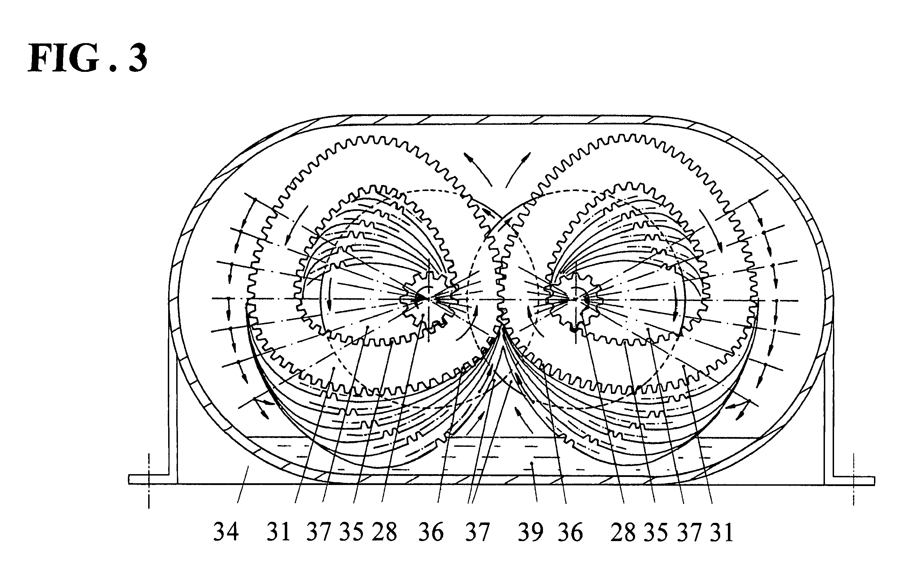

Selon une variante d'autonomie du dispositif, illustrée figure 3, le moteur (6) est constitué d'un mécanisme rotatif (38) transformant en énergie mécanique une énergie de source gravifique engendrée par la partie mobile de ce mécanisme rotatif constituée de rotors solidaires entre eux et respectivement entraînés dans un continuel mouvement rotatoire par une résultante de forces gravifiques appliquées continuellement sur des pièces mobiles et pesantes solidaires des rotors et constituant périodiquement sur chaque rotor des leviers pesants sur un secteur angulaire ayant pour sommet l'axe de rotation du rotor et pour bissecteur un plan horizontal théorique passant par ce même axe et ce mécanisme rotatif comportant un châssis (34) constituant un corps creux et deux rotors situés à l'intérieure du châssis (34) et reposant sur ce dernier (34) et constitués d'un engrenage comportant deux arbres de transmission dentés (28) parallèles entre eux et en position horizontale et des pièces modulaires mobiles et pesants (31) dont la section respective est constituée d'une bande pleine courbe et fermée et de forme polygonale régulière aux cotés et sommets tangents entre eux et présentant une denture périphérique intérieure (35) et une denture périphérique extérieure (36) et chaque arbre (28) traversant de part en part une rangée de pièces modulaires (31) et s'engrenant avec la denture périphérique intérieure (35) respective de ces pièces modulaires (31) respectivement engrenées avec la denture périphérique extérieure (36) d'une pièce modulaire (31) solidaire de l'autre arbre (28) et réciproquement et chaque rangée de pièces modulaires (31) constituant autour d'un arbre (28) un hélicoïde mobile excentré par rapport à l'axe de rotation de cet l'arbre et centré sur un axe théorique parallèle à l'axe de rotation de cet arbre (28) et cet axe se confondant à un plan horizontal théorique passant par l'axe de rotation des deux arbres (28) et excentrant le centre de gravité respectif des hélicoïdes mobiles et par rapport à l'axe de rotation de l'arbre (28) avec lequel ils sont respectivement engrenés et chaque pièce modulaire (31) constituant périodiquement l'un des leviers (31) dont le centre de gravité respectif est le plus excentré par rapport à l'axe de rotation de l'arbre (28) avec lequel elles sont engrenées et se situant sur un secteur angulaire ayant pour sommet l'axe de rotation de cet arbre et pour bissecteur un plan horizontal théorique passant par ce même axe et engendrant sur chaque hélicoïde mobile une résultante de forces gravifiques entraînant chaque pièce modulaire (31) dans un continuel mouvement rotatoire composé décrivant une courbe elliptique excentrée par rapport à l'axe de rotation de l'arbre (28) et centrée sur un axe théorique parallèle à l'axe de rotation de cet arbre (28) et cet axe se confondant à un plan horizontal théorique passant par l'axe de rotation de ces deux arbres de transmission (28) simultanément entraînés en rotation autour de leur axe respectif et dans le sens inverse l'un de l'autre et respectivement pourvus d'une pièce circulaire (37) située à l'extérieur du châssis (34) et constituant deux volants (37) régulateurs de vitesse et du mouvement rotatoire respectif des pièces modulaires (31) et l'un de ces arbres de transmission (28) supportant un pignon (8) situé à l'extérieure du châssis (34) et engrené avec la partie périphérique dentée (9) respective des leviers mobiles (4)(5) constituant la partie mobile du mécanisme rotateur entraînée en rotation autour de l'arbre (2) lorsque ce moteur (38) n'est pas immobilisé par des patins mobiles actionnés par des vérins exerçant une pression sur ces patins et plaquant ces derniers sur les faces latérales des volants (37) montés concentriquement sur les arbres de transmission (28) de ce mécanisme rotatif (38) dont la partie mobile est lubrifiée par barbotage périodique des pièces modulaires (31) et dans la partie basse du châssis (34) constituant le contenant d'un lubrifiant (39) à l'état liquide.

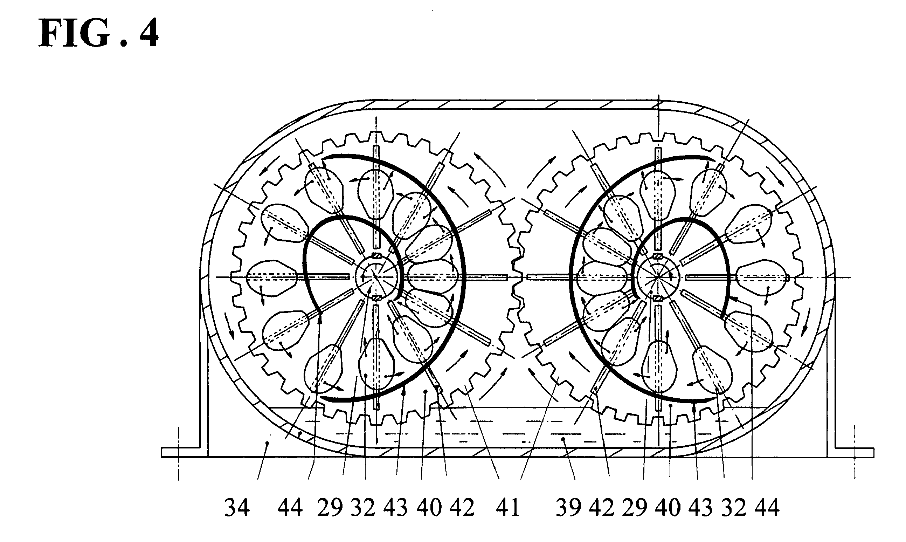

Selon une variante, illustrée figure 4, la partie mobile du mécanisme rotatif (38) est constituée de rotors solidaires entre-eux et comportant respectivement un arbre (29) en position horizontale et pourvu de pièces circulaires (40) présentant respectivement une denture périphérique (41) et disposées à espaces réguliers sur la longueur de cet arbre (29) et solidaires en rotation avec ce dernier (29) et des pièces modulaires mobiles et pesantes (32) solidaires des pièces circulaires (40) et disposées à espaces réguliers autour de l'arbre (29) et translatant librement sur les pièces circulaires (40) et suivant un axe théorique respectif (42) passant par l'axe de rotation de l'arbre (29), des déviateurs de trajectoire (43)(44) fixées sur le châssis (34) et situées de part et d'autre des pièces circulaires (40) et constituant deux rampes courbes de forme elliptique parallèles entre elles et positionnant et guidant les pièces modulaires (32) sur une courbe théorique de forme elliptique fermée autour de l'arbre (29) et excentrée par rapport à l'axe de rotation de l'arbre (29) et centrée sur un axe théorique parallèle à l'axe de rotation de cet arbre (29) et cet axe se confondant à un plan horizontal théorique passant par l'axe de rotation de ce même arbre (29) et excentrant continuellement le centre de gravité respectif des pièces circulaires (41) constituant respectivement et continuellement des leviers pesants situés sur un secteur angulaire ayant pour sommet l'axe de rotation de l'arbre (29) et pour bissecteur un plan horizontal théorique passant par ce même axe et engendrant sur chaque rotor une résultante de forces gravifiques entraînant ces derniers dans un continuel mouvement rotatoire autour de leur axe respectif et entraînant chaque pièce modulaire (32) dans un continuel mouvement rotatoire composé décrivant une courbe elliptique engendrée par les déviateurs de trajectoires (43) (44) et entraînant chaque arbre de transmission (29) dans un continuel mouvement rotatoire autour de son axe.

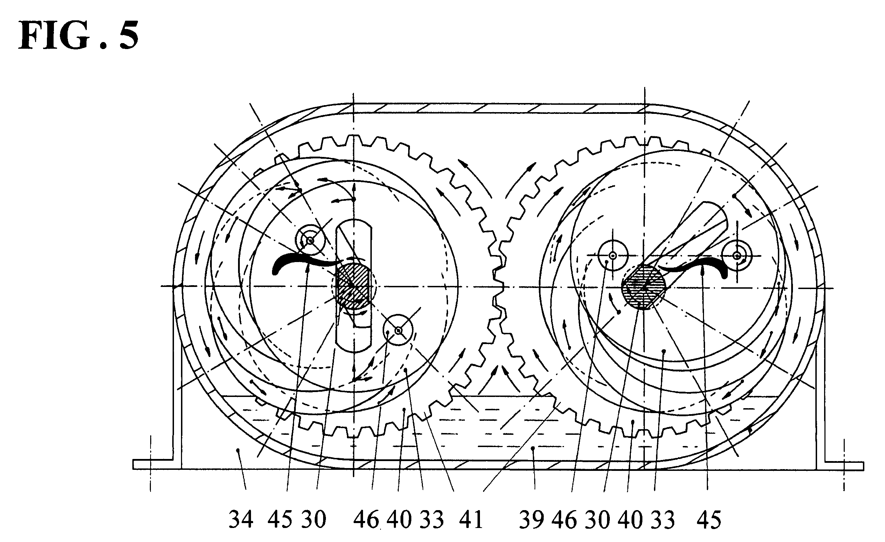

Selon une variante, illustrée figure 5, la partie mobile du mécanisme rotatif (38) est constituée de rotors solidaires entre-eux et comportant respectivement un arbre (30) en position horizontale pourvu d'une pièce circulaire (40) présentant une denture périphérique (41) et des pièces modulaires mobiles et pesantes (33) respectivement pourvues de galet (46) situés de part et d'autre des pièces modulaires (33) disposées à espaces réguliers sur la longueur de l'arbre (30) et solidaires en rotation avec ce dernier (30) et libres en translation sur ce dernier (30) suivant un axe théorique respectif perpendiculaire à l'arbre (30) et passant par l'axe de rotation de cet arbre (30) et constituant ensemble un hélicoïde mobile excentré par rapport à l'axe de rotation de l'arbre (30) et centré sur un axe parallèle à l'axe de rotation de l'arbre (30) et se confondant à un plan horizontal théorique passant par l'axe de rotation de cet arbre (30), des déviateurs de trajectoire (45) respectivement constitués d'une rampe sinusoïdale fixée sur le châssis (34) et disposés de part et d'autre des pièces modulaires (33) et les galets (46) guidés par les rampes (45) maintenant ensembles l'hélicoïde mobile en position excentrée par rapport à l'axe de rotation de l'arbre (30) et cet hélicoïde mobile décrivant une courbe de forme elliptique fermée autour de l'arbre (30) et excentrée par rapport à l'axe de rotation de cet arbre (30) et centrée sur un axe théorique parallèle à l'axe de rotation de cet arbre (30) et cet axe se confondant à un plan horizontal théorique passant par l'axe de rotation de ce même arbre (30) et excentrant continuellement le centre de gravité respectif des rotors et constituant sur chaque rotor des leviers pesants (33) sur un secteur angulaire ayant pour sommet l'axe de rotation du rotor et pour bissecteur un plan horizontal théorique passant par ce même axe et engendrant sur chaque rotor une résultante de forces gravifiques entraînant ces derniers dans un continuel mouvement rotatoire autour de leur axe respectif et entraînant chaque pièce modulaire (33) dans un continuel mouvement rotatoire composé décrivant une courbe elliptique engendrée par les déviateurs de trajectoires (45) et les galets (46) et entraînant chaque arbre de transmission (30) dans un continuel mouvement rotatoire autour de leur axe respectif.

Selon une variante non illustrée, la partie mobile du mécanisme rotatif (38) est constituée de rotors solidaires entre eux et comportant respectivement un arbre pourvu d'une pièce circulaire (40) présentant une denture périphérique (41) et d'un pignon (8) situé à l'extérieure du châssis (34) et engrené avec la partie périphérique dentée (9) respective des leviers mobiles (4)(5) et des pièces télescopiques disposés à espaces réguliers autour de l'arbre et sur sa longueur et suivant une disposition hélicoïdale et solidaires en rotation avec l'arbre et constituant respectivement et périodiquement des leviers pesant déployés perpendiculairement à l'axe de rotation de l'arbre et sur un secteur angulaire théorique ayant pour sommet l'axe de rotation de l'arbre et pour bissecteur un plan horizontal théorique passant par ce même axe et lorsque ces pièces télescopiques sont soumises à une pression exercée par un fluide agissant sur une partie interne des pièces télescopiques et déployant et rétractant périodiquement ces dernières, cette pression étant engendrée par un mécanisme rotatif (15) constituant le mécanisme générateur d'énergie, des déviateurs de trajectoire escamotables déployant et rétractant périodiquement ces pièces télescopiques durant la phase de démarrage de l'appareil.

A titre indicatif, les dimensions du dispositif selon l'invention sont proportionnelles à la puissance respective des appareils.

Le dispositif selon l'invention est particulièrement destiné à produire de l'énergie électrique.

## Revendications

1. Dispositif pour constituer des appareils autonomes produisant de l'énergie **caractérisé en ce qu'**il est constitué d'un appareillage comportant un mécanisme générateur d'énergie constitué de mécanismes rotatifs (15) dont la partie mobile respective (16)(17) est entraînée en rotation par des variateur de vitesse (12)(13)(14) mus par des leviers mobiles (4)(5) entraînés en rotation autour d'un axe (2) par un moteur (6) alimenté en énergie par le mécanisme générateur d'énergie dont la puissance est supérieure à celle du moteur (6), les leviers mobiles (4)(5) démultipliant la force rotatrice exercée par le moteur (6) et cet appareillage comportant un châssis (1) supportant un arbre (2) présentant une partie creuse et des orifices par lesquels passent des conducteurs d'énergie (3) et une partie mobile constituée de deux pièces hémisphériques creuses (4)(5) centrées sur l'arbre (2) et positionnées symétriquement l'une (4) par rapport à l'autre (5) et mobiles en rotation autour de l'arbre (2) et constituant deux leviers mobiles (4)(5) entraînés simultanément en rotation autour de l'arbre (2) et dans le sens inverse l'un de l'autre par un moteur (6) comportant un arbre (7) pourvu d'un pignon (8) engrené avec une couronne périphérique dentée (9) respective des leviers mobiles (4)(5) comportant respectivement un moyeu (10) traversé par l'arbre (2) et pourvu d'une denture périphérique (11) solidaire d'un organe de transmission comportant un arbre (12) pourvu de pignons (13)(14) de diamètres différents et constituant un variateur de vitesse (12)(13)(14) solidaire de la partie mobile respective de mécanismes rotatifs (15) générateurs d'énergie comportant respectivement un arbre (16) pourvu d'un pignon (17) entraînés en rotation par les variateurs de vitesse (12)(13)(14) lorsque le moteur (6) est alimenté en énergie et entraîne les deux leviers mobiles (4)(5) en rotation autour de l'arbre (2) et des paliers (20) supportant respectivement un arbre (19) pourvu d'un pignon (18) engrené avec la denture périphérique respective (9) des leviers mobiles (4)(5) constituant ensembles un sphéroïde creux à l'intérieur duquel sont fixés sur l'arbre (2) le support (21) respectif des variateurs de vitesse (12)(13)(14) et le support (23) du moteur (6) et des paliers (20) et des mécanismes rotatifs générateurs d'énergie (15) alimentant notamment et périodiquement des accumulateurs énergie, ces accumulateurs d'énergie alimentant le moteur (6) durant la phase de démarrage de cet appareil.

2. Dispositif selon la revendication 1 **caractérisé en ce que** le mécanisme générateur d'énergie est constitué de deux rotors (24)(25) solidaires entre-eux et comportant respectivement une couronne périphérique dentée (26)(27) engrenée avec un variateur de vitesse solidaire d'un levier mobile, les rotors (24) (25) étant entraînés simultanément en rotation autour de l'arbre (2) et dans le sens inverse l'un de l'autre lorsque les deux leviers mobiles (4)(5) sont entraînés en rotation autour de l'arbre (2) par un moteur (6).

3. Dispositif selon la revendication 1 et la revendication 2 **caractérisé en ce que** le moteur (6) est constitué d'un mécanisme rotatif (38) transformant en énergie mécanique une énergie de source gravifique engendrée par la partie mobile de ce mécanisme rotatif constituée de rotors solidaires entre eux et respectivement entraînés dans un continuel mouvement rotatoire par une résultante de forces gravifiques appliquées continuellement sur des pièces mobiles et pesantes solidaires des rotors et constituant périodiquement sur chaque rotor des leviers pesants sur un secteur angulaire ayant pour sommet l'axe de rotation du rotor et pour bissecteur un plan horizontal théorique passant par ce même axe et ce mécanisme rotatif comportant un châssis (34) constituant un corps creux et deux rotors situés à l'intérieure du châssis (34) et reposant sur ce dernier (34) et constitués d'un engrenage comportant deux arbres de transmission dentés (28) parallèles entre eux et en position horizontale et des pièces modulaires mobiles et pesants (31) dont la section respective est constituée d'une bande pleine courbe et fermée et de forme polygonale régulière aux cotés et sommets tangents entre eux et présentant une denture périphérique intérieure (35) et une denture périphérique extérieure (36) et chaque arbre (28) traversant de part en part une rangée de pièces modulaires (31) et s'engrenant avec la denture périphérique intérieure (35) respective de ces pièces modulaires (31) respectivement engrenées avec la denture périphérique extérieure (36) d'une pièce modulaire (31) solidaire de l'autre arbre (28) et réciproquement et chaque rangée de pièces modulaires (31) constituant autour d'un arbre (28) un hélicoïde mobile excentré par rapport à l'axe de rotation de cet l'arbre et centré sur un axe théorique parallèle à l'axe de rotation de cet arbre (28) et cet axe se confondant à un plan horizontal théorique passant par l'axe de rotation des deux arbres (28) et excentrant le centre de gravité respectif des hélicoïdes mobiles et par rapport à l'axe de rotation de l'arbre (28) avec lequel ils sont respectivement engrenés et chaque pièce modulaire (31) constituant périodiquement l'un des leviers (31) dont le centre de gravité respectif est le plus excentré par rapport à l'axe de rotation de l'arbre (28) avec lequel elles sont engrenées et se situant sur un secteur angulaire ayant pour sommet l'axe de rotation de cet arbre et pour bissecteur un plan horizontal théorique passant par ce même axe et engendrant sur chaque hélicoïde mobile une résultante de forces gravifiques entraînant chaque pièce modulaire (31) dans un continuel mouvement rotatoire composé décrivant une courbe elliptique excentrée par rapport à l'axe de rotation de l'arbre (28) et centrée sur un axe théorique parallèle à l'axe de rotation de cet arbre (28) et cet axe se confondant à un plan horizontal théorique passant par l'axe de rotation de ces deux arbres de transmission (28) simultanément entraînés en rotation autour de leur axe respectif et dans le sens inverse l'un de l'autre et respectivement pourvus d'une pièce circulaire (37) située à l'extérieur du châssis (34) et constituant deux volants (37) régulateurs de vitesse et du mouvement rotatoire respectif des pièces modulaires (31) et l'un de ces arbres de transmission (28) supportant un pignon (8) situé à l'extérieure du châssis (34) et engrené avec la partie périphérique dentée (9) respective des leviers mobiles (4)(5) constituant la partie mobile du mécanisme rotateur entraînée en rotation autour de l'arbre (2) lorsque ce moteur (38) n'est pas immobilisé par des patins mobiles actionnés par des vérins exerçant une pression sur ces patins et plaquant ces derniers sur les faces latérales des volants (37) montés concentriquement sur les arbres de transmission (28) de ce mécanisme rotatif (38) dont la partie mobile est lubrifiée par barbotage périodique des pièces modulaires (31) et dans la partie basse du châssis (34) constituant le contenant d'un lubrifiant (39) à l'état liquide.

4. Dispositif selon la revendication 3 **caractérisé en ce que** la partie mobile du mécanisme rotatif (38) est constituée de rotors solidaires entre-eux et comportant respectivement un arbre (29) en position horizontale et pourvu de pièces circulaires (40) présentant respectivement une denture périphérique (41) et disposées à espaces réguliers sur la longueur de cet arbre (29) et solidaires en rotation avec ce dernier (29) et des pièces modulaires mobiles et pesantes (32) solidaires des pièces circulaires (40) et disposées à espaces réguliers autour de l'arbre (29) et translatant librement sur les pièces circulaires (40) et suivant un axe théorique respectif (42) passant par l'axe de rotation de l'arbre (29), des déviateurs de trajectoire (43)(44) fixées sur le châssis (34) et situées de part et d'autre des pièces circulaires (40) et constituant deux rampes courbes de forme elliptique parallèles entre elles et positionnant et guidant les pièces modulaires (32) sur une courbe théorique de forme elliptique fermée autour de l'arbre (29) et excentrée par rapport à l'axe de rotation de l'arbre (29) et centrée sur un axe théorique parallèle à l'axe de rotation de cet arbre (29) et cet axe se confondant à un plan horizontal théorique passant par l'axe de rotation de ce même arbre (29) et excentrant continuellement le centre de gravité respectif des pièces circulaires (41) constituant respectivement et continuellement des leviers pesants situés sur un secteur angulaire ayant pour sommet l'axe de rotation de l'arbre (29) et pour bissecteur un plan horizontal théorique passant par ce même axe et engendrant sur chaque rotor une résultante de forces gravifiques entraînant ces derniers dans un continuel mouvement rotatoire autour de leur axe respectif et entraînant chaque pièce modulaire (32) dans un continuel mouvement rotatoire composé décrivant une courbe elliptique engendrée par les déviateurs de trajectoires (43) (44) et entraînant chaque arbre de transmission (29) dans un continuel mouvement rotatoire autour de son axe.

5. Dispositif selon la revendication 3 **caractérisé en ce que** la partie mobile du mécanisme rotatif (38) est constituée de rotors solidaires entre-eux et comportant respectivement un arbre (30) en position horizontale pourvu d'une pièce circulaire (40) présentant une denture périphérique (41) et des pièces modulaires mobiles et pesantes (33) respectivement pourvues de galet (46) situés de part et d'autre des pièces modulaires (33) disposées à espaces réguliers sur la longueur de l'arbre (30) et solidaires en rotation avec ce dernier (30) et libres en translation sur ce dernier (30) suivant un axe théorique respectif perpendiculaire à l'arbre (30) et passant par l'axe de rotation de cet arbre (30) et constituant ensemble un hélicoïde mobile excentré par rapport à l'axe de rotation de l'arbre (30) et centré sur un axe parallèle à l'axe de rotation de l'arbre (30) et se confondant à un plan horizontal théorique passant par l'axe de rotation de cet arbre (30), des déviateurs de trajectoire (45) respectivement constitués d'une rampe sinusoïdale fixée sur le châssis (34) et disposés de part et d'autre des pièces modulaires (33) et les galets (46) guidés par les rampes (45) maintenant ensembles l'hélicoïde mobile en position excentrée par rapport à l'axe de rotation de l'arbre (30) et cet hélicoïde mobile décrivant une courbe de forme elliptique fermée autour de l'arbre (30) et excentrée par rapport à l'axe de rotation de cet arbre (30) et centrée sur un axe théorique parallèle à l'axe de rotation de cet arbre (30) et cet axe se confondant à un plan horizontal théorique passant par l'axe de rotation de ce même arbre (30) et excentrant continuellement le centre de gravité respectif des rotors et constituant sur chaque rotor des leviers pesants (33) sur un secteur angulaire ayant pour sommet l'axe de rotation du rotor et pour bissecteur un plan horizontal théorique passant par ce même axe et engendrant sur chaque rotor une résultante de forces gravifiques entraînant ces derniers dans un continuel mouvement rotatoire autour de leur axe respectif et entraînant chaque pièce modulaire (33) dans un continuel mouvement rotatoire composé décrivant une courbe elliptique engendrée par les déviateurs de trajectoires (45) et les galets (46) et entraînant chaque arbre de transmission (30) dans un continuel mouvement rotatoire autour de leur axe respectif.

6. Dispositif selon la revendication 1 et la revendication 3 **caractérisé en ce que** la partie mobile du mécanisme rotatif (38) est constituée de rotors solidaires entre eux et comportant respectivement un arbre pourvu d'une pièce circulaire (40) présentant une denture périphérique (41) et d'un pignon (8) situé à l'extérieure du châssis (34) et engrené avec la partie périphérique dentée (9) respective des leviers mobiles (4)(5) et des pièces télescopiques disposés à espaces réguliers autour de l'arbre et sur sa longueur et suivant une disposition hélicoïdale et solidaires en rotation avec l'arbre et constituant respectivement et périodiquement des leviers pesant déployés perpendiculairement à l'axe de rotation de l'arbre et sur un secteur angulaire théorique ayant pour sommet l'axe de rotation de l'arbre et pour bissecteur un plan horizontal théorique passant par ce même axe et lorsque ces pièces télescopiques sont soumises à une pression exercée par un fluide agissant sur une partie interne des pièces télescopiques et déployant et rétractant périodiquement ces dernières, cette pression étant engendrée par un mécanisme rotatif (15) constituant le mécanisme générateur d'énergie, des déviateurs de trajectoire escamotables déployant et rétractant périodiquement ces pièces télescopiques durant la phase de démarrage de l'appareil.
